# EUROPÄISCHE PATENTSCHRIFT

(11) **EP 2 366 272 B1**
(45) Veröffentlichungstag und Bekanntmachung des Hinweises auf die Patenterteilung: **17.04.2013**
(21) Anmeldenummer: 11155739.3
(22) Anmeldetag: 24.02.2011
(51) Int. Cl.: A01B 73/00, A01B 73/04, A01D 41/14

(54) **Zwischen Betriebs- und Transportstellung bewegbarer Erntevorsatz**
Harvesting attachment which can be moved between an operational and a transport position
Accessoire de récolte mobile entre une position de fonctionnement et une position de transport

(30) Priorität: 15.03.2010 DE 102010002878
(43) Veröffentlichungstag der Anmeldung: 21.09.2011
(73) Patentinhaber: Maschinenfabrik Kemper GmbH & Co. KG, 48973 Stadtlohn (DE)
(72) Erfinder: Wübbels, Richard, 46414, Rhede (DE)
(74) Vertreter: Holst, Sönke

(56) Entgegenhaltungen:
- EP-A1- 1 287 732
- EP-A1- 2 067 397
- EP-A1- 2 111 740
- EP-A2- 0 827 684
- DE-A1- 3 342 962
- DE-U1- 9 316 973
- DE-U1- 29 817 666
- US-A- 4 355 689
- US-A- 4 409 780
- US-B1- 6 205 757

## Beschreibung

Die Erfindung betrifft einen Erntevorsatz mit:
einem Innenteil, der an einem Einzugsgehäuse einer Erntemaschine befestigbar ist und an dessen beiden seitlichen Enden Mittelteile um sich in Vorwärtsrichtung und horizontal erstreckende, erste Achsen schwenkbar angelenkt sind,
und mit an dem an beiden seitlichen Enden der Mittelteile um sich horizontal erstreckende, zweite Achsen schwenkbar angelenkten Außenteilen,
wobei die Außenteile, Mittelteile und der Innenteil jeweils Rahmenabschnitte umfassen, an denen Schneid- und Einzugseinrichtungen zum Abscheiden und Abfördern von auf einem Feld stehendem Erntegut befestigt sind,
der Innenteil, die Mittelteile und die Außenteile sich in einer Betriebsstellung koaxial zueinander in einer horizontalen Ebene erstrecken
und zum Einfalten in eine Transportstellung die Außenteile gegenüber den Mittelteilen durch Aktoren um die zweiten Achsen nach oben und innen verschwenkbar sind und die Mittelteile durch Aktoren gegenüber dem Innenteil um die ersten Achsen nach oben verschwenkbar sind.

### Stand der Technik

Landwirtschaftliche Erntemaschinen werden üblicherweise mit Erntevorsätzen ausgestattet, deren Breite die zulässige Transportbreite auf Straßen überschreitet. Sollen die Erntevorsätze nicht auf einem Anhänger hinter der Erntemaschine hergezogen werden, werden sie üblicherweise in eine Transportposition eingefaltet.

Ein derartiger Erntevorsatz ist in der als gattungsbildend angesehenen EP 0 992 187 A1 beschrieben. Er umfasst ein am Einzugsgehäuse der Erntemaschine abnehmbar befestigtes Innenteil, an dem an beiden seitlichen Enden Mittelteile um sich in Vorwärtsrichtung und horizontal erstreckende erste Achsen schwenkbar angelenkt sind. Am äußeren Ende der Mittelteile sind jeweils Außenteile um sich in Vorwärtsrichtung und horizontal erstreckende, zweite Achsen schwenkbar angelenkt. Die Außenteile, Mittelteile und der Innenteil umfassen jeweils Rahmenabschnitte, an denen Mäh- und Einzugseinrichtungen mit in Drehung versetzbaren Schneid- und Förderscheiben befestigt sind. In der Betriebsstellung erstrecken sich der Innenteil, die Mittelteile und die Außenteile koaxial zueinander in einer horizontalen Ebene. Soll die Erntemaschine auf einer Straße transportiert werden, werden die Außenteile gegenüber den Mittelteilen durch Aktoren in Form von Hydraulikzylindern um etwa 130° um die zweiten Achsen nach oben und innen verschwenkt, und die Mittelteile werden durch Aktoren in Form von Hydraulikzylindern gegenüber dem Innenteil um etwa 90° um die ersten Achsen nach oben verschwenkt. In der Transportstellung erstrecken sich die Mittelteile demnach vom Innenteil vertikal nach oben, während sich die Außenteile von den Mittelteilen nach innen und unten erstrecken. Betrachtet man den Erntevorsatz von der Seite her, liegen dann alle Rahmenabschnitte in einer sich vertikal erstreckenden Ebene.

Die DE 199 33 779 A1 beschreibt einen anderen Erntevorsatz, der sich aus zwei beidseits der Längsmittelebene der selbstfahrenden Erntemaschine angeordneten Endlosförderern aufbaut. Die beiden Endlosförderer sind um in Vorwärtsrichtung auseinanderlaufende und zum Boden hin geneigte Schwenkachsen in eine Transportstellung verschwenkbar.

Die DE 29817666U1 beschreibt einen anderen Erntevorsatz mit einen Innenteil, seitlichen Mittelteilen und Außenteilen, wobei zum Einfalten in einer Transportstellung die Teile n nach oben verschwenkbar sind.

### Ausgabe

Der in der EP 0 992 187 A1 beschriebene Erntevorsatz weist den Nachteil auf, dass die Arbeitsbreite durch die zulässige Gesamtbreite des Innenteils, die auch die Breite der Außenteile begrenzt, und durch die maximalen Abmessungen der Mittelteile eingeschränkt ist, die wiederum dadurch begrenzt wird, dass der Fahrer der Erntemaschine noch einen Blick auf die Straße benötigt.

Die maximale Breite der Anordnung nach DE 199 33 779 A1 ist wiederum durch die maximale Durchfahrtshöhe der Erntemaschine eingeschränkt.

Das der Erfindung zugrunde liegende Problem wird darin gesehen, einen Erntevorsatz bereitzustellen, der gegenüber dem Stand der Technik bei vergleichbarem Aufwand eine größere Arbeitsbreite ermöglicht.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Erntevorsatz umfasst einen Innenteil, der abnehmbar an einem Einzugsgehäuse einer Erntemaschine befestigt werden kann. Der Innenteil kann starr oder um eine sich in Vorwärtsrichtung erstreckende Pendelachse schwenkbar am Einzugsgehäuse befestigt werden.

An beiden seitlichen Enden des Innenteils sind jeweils Mittelteile um sich in Vorwärtsrichtung und horizontal erstreckende, erste Achsen schwenkbar angelenkt. An beiden seitlichen Enden der Mittelteile sind jeweils Außenteile um sich horizontal erstreckende, zweite Achsen schwenkbar angelenkt. Die zweiten Achsen sind in Vorwärtsrichtung auseinanderlaufend abgewinkelt, divergieren somit in der horizontalen Ebene. Die Außenteile, Mittelteile und der Innenteil sind jeweils mit Rahmenabschnitte ausgestattet, an denen Schneid- und Einzugseinrichtungen zum Abscheiden und Abfördern von auf einem Feld stehendem Erntegut befestigt sind. Die Schneid-und Einzugseinrichtungen können als um vertikale Achsen rotierende Trommeln mit Aussparungen zur Aufnahme von Pflanzenstängeln und darunter angeordneten Schneidmessern oder als Endlosförderer ausgeführt sein. Der Innenteil, die Mittelteile und die Außenteile erstrecken sich in ihrer Betriebsstellung koaxial zueinander in einer horizontalen Ebene. Um den Erntevorsatz in eine schmalere Transportstellung einzuklappen werden die Außenteile gegenüber den Mittelteilen durch Aktoren um etwa 180° um die zweiten Achsen nach oben und innen verschwenkt. Vorher, gleichzeitig oder anschließend werden die Mittelteile durch Aktoren gegenüber dem Innenteil um die ersten Achsen um ca. 90° nach oben verschwenkt.

Auf diese Weise erreicht man, dass die Mittelteile sich in der Transportstellung vertikal nach oben erstrecken. Die an ihren seitlichen (in der Transportstellung oberen) Enden angelenkten Außenteile erstrecken sich aufgrund der vorgeschlagenen Position der zweiten Achsen von dort nach vorn und unten. Dadurch wird eine weitere Dimension (die Vorwärtsrichtung) verwendet, um Platz für die Aufnahme der Außenteile zu schaffen. Insbesondere wird ermöglicht, die Arbeitsbreite der Außenteile gleich der Arbeitsbreite der Mittelteile oder sogar größer als letztere zu wählen. Die Schneid- und Einzugseinrichtungen liegen in der Transportstellung (aufgrund der Verschwenkung der Außenteile gegenüber den Mittelteilen um einen Winkel von ca. 180° um die zweiten Achsen) in einer vertikalen Ebene, was die Sicht des Fahrers der Erntemaschine auf die Straße verbessert.

### Ausführungsbeispiel

In den Zeichnungen ist ein nachfolgend näher beschriebenes Ausführungsbeispiel der Erfindung dargestellt. Es zeigt:
- Fig. 1: eine Draufsicht auf einen Erntevorsatz in der Betriebsstellung,
- Fig. 2: die Draufsicht aus Figur 1 bei in die Transportstellung verbrachten Außenteilen, und
- Fig. 3: eine seitliche Ansicht einer Erntemaschine und des Erntevorsatzes in der Transportstellung.

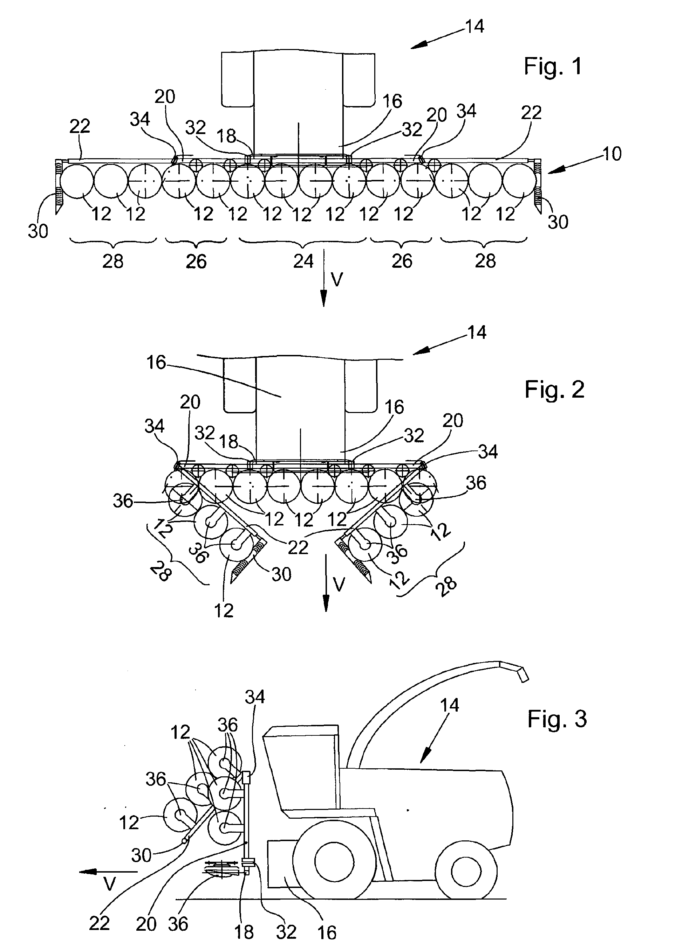

In der Figur 1 ist ein Erntevorsatz 10 in Form eines mit insgesamt vierzehn Schneid- und Einzugseinrichtungen 12 ausgestatteten Mähvorsatzes dargestellt. Die jeweils gleichartigen Schneid- und Einzugseinrichtungen 12 sind symmetrisch zu einer vertikalen Längsmittelebene des Erntevorsatzes 10 angeordnet und dienen zum Einziehen und Abschneiden von auf einem Feld stehenden Pflanzen. Die abgeschnittenen, eingezogenen Pflanzen werden in an sich bekannter Weise einem Einzugsgehäuse 16 einer an der Rückseite des Erntegeräts 10 angeordneten, den Erntevorsatz 10 tragenden und über ein Feld bewegenden Erntemaschine 14 zugeführt, die hier als Feldhäcksler ausgeführt ist.

Im Folgenden beziehen sich Richtungsangaben, wie vorn, hinten, oben und unten auf die Vorwärtsrichtung V der Erntemaschine 14 und des Erntevorsatzes 10, die in der Figur 1 nach unten verläuft.

Der Erntevorsatz 10 umfasst insgesamt fünf Rahmenabschnitte 18, 20 und 22. Ein innerer Rahmenabschnitt 18 ist starr oder pendelnd am Einzugsgehäuse 16 befestigt und trägt vier Schneid- und Einzugseinrichtungen 12. An beiden seitlichen Enden des inneren Rahmenabschnitts 18 ist je ein mittlerer Rahmenabschnitt 20 angebracht, der zwei Schneid- und Einzugseinrichtungen 12 trägt. Außen an den mittleren Rahmenabschnitten 20 sind schließlich äußere Rahmenabschnitte 22 befestigt, die jeweils drei Schneid- und Einzugseinrichtungen 12 haltern. Der innere Rahmenabschnitt 18 mit den vier mittleren Schneid- und Einzugseinrichtungen 12 bildet einen Innenteil 24 des Erntevorsatzes 10. Die mittleren Rahmenabschnitte 20 mit den jeweils zwei Schneid- und Einzugseinrichtungen 12 bilden Mittelteile 26 des Erntevorsatzes 10. Die äußeren Rahmenabschnitte 22 mit den jeweils drei Schneid- und Einzugseinrichtungen 12 bilden Außenteile 28 des Erntevorsatzes 10. An den äußeren Enden der äußeren Rahmenabschnitte 22 sind jeweils Stängelheberschnecken 30 befestigt, die auch entfallen könnten.

Der Erntevorsatz 10 ist in der in Figur 1 dargestellten Betriebsstellung relativ breit. Um ihn auf einer öffentlichen Straße transportieren zu können, ohne ihn von der Erntemaschine 14 abzunehmen und zum Transport auf einem Anhänger abzulegen oder auf einem integrierten Fahrwerk hinter der Erntemaschine 14 herzuziehen, sind die mittleren Rahmenabschnitte 20 am inneren Rahmenabschnitt 18 um je eine erste horizontale, parallel zur Vorwärtsfahrtrichtung V verlaufende Achse 32 schwenkbar befestigt. Die mittleren Rahmenabschnitte 20 können daher mittels eines Aktors in Form eines Hydraulikzylinders (nicht gezeigt) um ca. 90° in eine Transportstellung verschwenkt werden, in der sie vertikal orientiert sind. Auch die äußeren Rahmenabschnitte 22 sind um eine zweite, horizontale, mit der Vorwärtsfahrtrichtung V einen spitzen Winkel α, der vorzugsweise zwischen 30° und 45° liegt, einschließende Achse 34 um einen Winkel von etwa 180° schwenkbar an den mittleren Rahmenabschnitten 20 angebracht. Sie können somit mittels eines Aktors in Form eines Hydraulikzylinders (nicht gezeigt) in eine Transportstellung verschwenkt werden. Die Steuerung der Aktoren erfolgt vorzugsweise derart, dass zunächst die äußeren Rahmenabschnitte 22 von der Betriebs- in die Transportstellung verschwenkt werden (vgl. Figur 2). Danach werden die mittleren Rahmenabschnitte 20 angehoben (vgl. Figur 3). Das Absenken der mittleren Rahmenabschnitte 20 und der äußeren Rahmenabschnitte 22 in die Betriebsstellung erfolgt in umgekehrter Reihenfolge. Eine detailliertere Beschreibung geeigneter Schwenkmechanismen wird in der EP 0 992 817 A1 gegeben.

Aufgrund der in Vorwärtsrichtung V divergierenden Winkel α der Achsen 34 und der Schwenkwinkel der äußeren Rahmenabschnitte 22 um ca. 180° um diese Achsen 34 erstrecken sich die äußeren Rahmenabschnitte 22 in der in Figur 2 dargestellten Zwischenstellung, in welcher die mittleren Rahmenabschnitte 20 sich noch in der Betriebsstellung befinden, von den Achsen 34 schräg nach vorn und innen. Wegen des Schwenkwinkels von ca. 180° sind in der Draufsicht die Getriebegehäuse 36 der an den äußeren Rahmenabschnitten 22 angebrachten Schneid- und Einzugseinrichtungen 12 erkennbar. Die rückwärtigen Bereiche der Außenteile 28 befinden sich oberhalb der Mittelteile 26.

Werden nun auch die mittleren Rahmenabschnitte 20 in die Transportstellung gebracht, wie in der Figur 3 dargestellt, sodass sie sich vertikal vom inneren Rahmenabschnitt 18 nach oben erstrecken, sind die äußeren Rahmenabschnitte 22 von der Achse 34 schräg nach unten und vorn orientiert. Die Schneid- und Einzugseinrichtungen 12 sowohl der Außenteile 28 als auch der Mittelteile 26 befinden sich in vertikalen Ebenen, was dem Fahrer der Erntemaschine 14 eine gute Sicht bietet. Die Orientierung der äußeren Rahmenabschnitte 22 nach vorn und unten ermöglicht es, die Arbeitsbreite der Außenteile 28 größer als die Arbeitsbreite des Innenteils 24 (die durch die zulässige Breite bei einer Straßenfahrt begrenzt ist) und größer als die Arbeitsbreite der Mittelteile 26 (die durch die Einschränkung des Sichtbereichs für den Fahrer der Erntemaschine 14 begrenzt ist) zu wählen.

## Patentansprüche

1. Erntevorsatz (10) mit:
einem Innenteil (24), der an einem Einzugsgehäuse (16) einer Erntemaschine (14) befestigbar ist und an dessen beiden seitlichen Enden Mittelteile (26) um sich in Vorwärtsrichtung und horizontal erstreckende, erste Achsen (32) schwenkbar angelenkt sind,
und mit an dem an beiden seitlichen Enden der Mittelteile (26) um sich horizontal erstreckende, zweite Achsen (34) schwenkbar angelenkten Außenteilen (28),
wobei die Außenteile (28), Mittelteile (26) und der Innenteil (24) jeweils Rahmenabschnitte (22, 20, 18) umfassen, an denen Schneid- und Einzugseinrichtungen (12) zum Abscheiden und Abfördern von auf einem Feld stehendem Erntegut befestigt sind,
der Innenteil (24), die Mittelteile (26) und die Außenteile (28) sich in einer Betriebsstellung koaxial zueinander in einer horizontalen Ebene erstrecken, **dadurch gekennzeichnet dass** zum Einfalten in eine Transportstellung die Außenteile (28) gegenüber den Mittelteilen (26) um die zweiten Achsen (34) nach oben und innen verschwenkbar sind und die Mittelteile (26) gegenüber dem Innenteil (24) um die ersten Achsen (32) nach oben verschwenkbar sind,
dass die zweiten Achsen (34) in Vorwärtsrichtung auseinanderlaufend abgewinkelt sind und dass die Außenteile (28) gegenüber den Mittelteilen (26) um etwa 180° in die Transportstellung verschwenkbar sind.

2. Erntevorsatz (10) nach Anspruch 1, **dadurch gekennzeichnet, dass** die Arbeitsbreite der Außenteile (28) gleich der oder größer als die Arbeitsbreite der Mittelteile (26) ist.

3. Erntevorsatz (10) nach Anspruch 1 oder 2, **dadurch gekennzeichnet, dass** die zweiten Achsen (34) um einen spitzen Winkel (α) gegenüber der Vorwärtsrichtung (V) nach außen abgewinkelt sind.

## Claims

1. Harvesting attachment (10), with:
an inner part (24) which is fastenable to an intake housing (16) of a harvesting machine (14) and to the two lateral ends of which central parts (26) are coupled pivotably about first axes (32) extending in the forwards direction and horizontally,
and with outer parts (28) which are coupled pivotably to the two lateral ends of the central parts (26) about second axes (34) extending horizontally,
wherein the outer parts (28), central parts (26) and the inner part (24) respectively comprise frame sections (22, 20, 18) to which cutting and intake devices (12) for cutting and conveying away crop standing in a field are fastened,
the inner part (24), the central parts (26) and the outer parts (28) extend coaxially with respect to one another in a horizontal plane in an operational position, **characterized in that**,
for folding into a transport position, the outer parts (28) are pivotable upwards and inwards about the second axes (34) in relation to the central parts (26), and the central parts (26) are pivotable upwards about the first axes (32) in relation to the inner part (24),
**in that** the second axes (34) are angled so as to diverge in the forward direction, and **in that** the outer parts (28) are pivotable through approximately 180° in relation to the central parts (26) into the transport position.

2. Harvesting attachment (10) according to Claim 1, **characterized in that** the working width of the outer parts (28) is identical to or greater than the working width of the central parts (26).

3. Harvesting attachment (10) according to Claim 1 or 2, **characterized in that** the second axes (34) are angled outwards by an acute angle (α) in relation to the forward direction (V).

## Revendications

1. Accessoire de récolte (10), comprenant :
une partie intérieure (24) qui peut être fixée à un boîtier d'alimentation (16) d'une machine de récolte (14) et sur les deux extrémités latérales de laquelle sont articulées des parties centrales (26) de manière pivotante autour de premiers axes (32) s'étendant horizontalement et dans la direction d'avance,
et comprenant des parties extérieures (28) articulées sur les deux extrémités latérales des parties centrales (26), de manière pivotante autour de deuxièmes axes (34) s'étendant horizontalement,
les parties extérieures (28), les parties centrales (26) et la partie intérieure (24) comportant respectivement des sections de cadre (22, 20, 18) auxquelles sont fixés des dispositifs de coupe et d'alimentation (12) pour séparer et évacuer un produit de récolte se trouvant dans un champ,
la partie intérieure (24), les parties centrales (26) et les parties extérieures (28) s'étendant de manière coaxiale les unes par rapport aux autres dans un plan horizontal dans une position de fonctionnement, **caractérisé en ce**
**que** pour le repliement dans une position de transport, les parties extérieures (28) peuvent être pivotées vers le haut et l'intérieur par rapport aux parties centrales (26) autour des deuxièmes axes (34) et les parties centrales (26) peuvent être pivotées vers le haut par rapport à la partie intérieure (24) autour des premiers axes (32),
en ce que les deuxièmes axes (34) sont pliés en s'écartant dans la direction d'avance et en ce que les parties extérieures (28) peuvent être pivotées par rapport aux parties centrales (26) d'environ 180° dans la direction de transport.

2. Accessoire de récolte (10) selon la revendication 1, **caractérisé en ce que** la largeur de travail des parties extérieures (28) est supérieure ou égale à la largeur de travail des parties centrales (26).

3. Accessoire de récolte (10) selon la revendication 1 ou 2, **caractérisé en ce que** les deuxièmes axes (34) sont pliés vers l'extérieur suivant un angle aigu (α) par rapport à la direction d'avance (V).
